# EUROPEAN PATENT SPECIFICATION

(11) **EP 2 995 168 B1**
(45) Date of publication and mention of the grant of the patent: **03.10.2018**
(21) Application number: 14795340.0
(22) Date of filing: 06.05.2014
(51) Int. Cl.: H04W 88/06, H04W 52/02, H04W 72/12

(54) **METHODS FOR PREVENTING IN-DEVICE COEXISTENCE INTERFERENCE AND COMMUNICATIONS APPARATUS UTILIZING THE SAME**
VERFAHREN ZUR VORBEUGUNG VON KOEXISTENZINTERFERENZ IN EINER VORRICHTUNG UND KOMMUNIKATIONSVORRICHTUNG DAMIT
PROCÉDÉS DESTINÉS À ÉVITER UN BROUILLAGE DE COEXISTENCE DANS DES DISPOSITIFS ET APPAREIL DE COMMUNICATION L'UTILISANT

(30) Priority: 06.05.2013 US 201361819756 P; 05.05.2014 US 201414269361
(43) Date of publication of application: 16.03.2016
(73) Proprietor: MediaTek Inc., Hsin-Chu 300 (TW)
(72) Inventor: CHEN, Yih-Shen, Hsinchu County Taiwan 302 (TW); KO, Li-Chun, Taipei City Taiwan 105 (TW); HSU, Chia-Hsiang, Kaohsiung City Taiwan 807 (TW)
(74) Representative: 2K Patentanwälte Blasberg Kewitz & Reichel
(86) International application number: PCT/CN2014/076872
(87) International publication number: WO 2014/180300

(56) References cited:
- WO-A1-2011/157235
- CN-A- 102 378 395
- CN-A- 102 548 013
- US-A1- 2010 067 424
- US-A1- 2012 082 140
- US-A1- 2012 188 907
- US-A1- 2012 327 850

## Description

### CROSS REFERENCE TO RELATED APPLICATIONS

This application claims the benefit of U.S. Provisional Application No. 61/819,756 filed 2013/05/06 and entitled "Activation Timing of Wi-Fi Protection for LTE Coexistence", U.S. Application No. 14/269,361, filed on 2014/05/05.

### FIELD OF INVENTION

The invention relates to methods for preventing in-device coexistence (IDC) interference of a communications apparatus.

### BACKGROUND OF THE INVENTION

With advancements in communications techniques, mobile stations (MS, which may be interchangeably referred to as user equipment (UE)) are now capable of handling multiple radio access technologies (RAT), such as at least two of GSM/GPRS/EDGE (Global System for Mobile Communications/General Packet Radio Service/Enhanced Data rates for Global Evolution), W-CDMA (Wideband Code Division Multiple Access) RAT, Wi-Fi (Wireless Fidelity), LTE (Long Term Evolution), or the like via one communications apparatus.

Generally, different RATs operate in different frequency bands. However, some of them may still operate in a frequency band that is close to or even overlaps with the operating band of other RATs. For example, LTE band 40 (2300MHz∼2400MHz) is very close to the ISM (Institute for Supply Management) band (2400MHz∼2483.5MHz), and there is nearly no guard band between the LTE band 40 and the ISM band.

When a communications apparatus capable of simultaneously providing more than one radio access technology (RAT) communications that operate in adjacent frequency bands, in-device coexistence (IDC) interference occurs when one radio module is performing uplink transmission while another radio module is performing downlink reception.

Therefore, a communications apparatus capable of simultaneously providing multi-RAT communications with intelligent IDC interference prevention is required.

WO 2011/157235 A1 discloses an apparatus and a method for providing time adjustment of an input signal, the apparatus including a coarse timing digital-to-analog converter (DAC), a replica delay element and an interpolator. The coarse timing DAC has multiple delay settings for providing a coarse timing adjustment of the input signal, and outputs a first delayed signal by delaying the input signal by a first delay time corresponding to a selected setting of the multiple delay settings. The replica delay element receives the first delayed signal from the coarse timing DAC and outputs a second delayed signal by delaying the first delayed signal by a predetermined second delay time. The interpolator blends either the input signal and the first delayed signal or the first delayed signal and the second delayed signal for providing a fine timing adjustment of the input signal, and outputs a timing adjusted output signal including the coarse timing adjustment and the fine timing adjustment.

US 2012/327850 A1 discloses that in a mobile device capable of wireless communications using multiple radio access technologies (RATs), the transmit communications of one RAT may cause interference with receive communications of another RAT. In the case of wireless local area network (WLAN) communications, a CTS-to-Self message may control the timing of WLAN communications such that WLAN receptions do not overlap with transmissions of another RAT, such as a Long Term Evolution (LTE) radio. The CTS-to-Self message timing control may be executed by a mobile device operating as a WLAN access point.

US 2010/067424 A1 discloses a system comprising an access point and a station in communication with the access point. The station has at least two network technology subsystems subject to coexistence interference. The station selectively implements bounded Power Save (PS)-Polling (BPS) logic to handle communications between the station and the access point. The BPS logic operates to confine PS-Poll transmissions starts to one of two separate windows during a medium grant duration of the station.

US 2012/082140 A1 discloses a method of TDM in-device coexistence (IDC) interference avoidance. In a wireless communication device, a first radio module is co-located with a second radio module in the same device platform. The first radio module obtains traffic and scheduling information of the second radio module. The first radio module then determines a desired TDM pattern based on the traffic and scheduling information to prevent IDC interference with the second radio module. The first radio module also transmits TDM coexistence pattern information based on the desired TDM pattern to a base station. In one embodiment, the TDM coexistence pattern information comprises a recommended TDM pattern periodicity and a scheduling period to maximize IDC efficiency subject to limited level of IDC interference possibility.; In one specific example, the TDM coexistence pattern information comprises a set of discontinuous reception (DRX) configuration parameters defined in long-term evolution (LTE) 3GPP standards.

### SUMMARY OF THE INVENTION

Communications apparatuses and methods for preventing in device coexistence (IDC) interference of a communications apparatus are provided in the appended claims. An exemplary embodiment of a communications apparatus comprises a first radio module providing a first wireless communications service in a first wireless network in compliance with a first protocol and a second radio module providing a second wireless communications service in a second wireless network in compliance with a second protocol. The first radio module determines whether a protection scheme is to be performed, and when the first radio module determines that the protection scheme is to be performed, the first radio module further determines a predetermined time to activate the protection scheme. The second radio module transmits a predetermined message to the second wireless network at the predetermined time to activate the protection scheme, wherein when the first radio module determines whether the protection scheme is to be performed and the predetermined time to activate the protection scheme according to a sub-frame configuration, the predetermined time to activate the protection scheme falls in a duration of a special sub-frame configured for the first radio module.

An exemplary embodiment of a method for preventing in device coexistence (IDC) interference of a communications apparatus comprising at least a first radio module providing a first wireless communications service in a first wireless network in compliance with a first protocol and a second radio module providing a second wireless communications service in a second wireless network in compliance with a second protocol is provided. The method comprises: determining whether a protection scheme for preventing IDC interference is to be performed; determining a predetermined time to activate the protection scheme when the protection scheme is determined to be performed; and transmitting a predetermined message to the second wireless network at the predetermined time to activate the protection scheme, wherein when whether the protection scheme is to be performed and the predetermined time to activate the protection scheme are determined according to a sub-frame configuration of the first radio module (10), the predetermined time to activate the protection scheme falls in a duration of a special sub-frame configured for the first radio module.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:
FIG. 1 shows a block diagram of a communications apparatus according to an embodiment of the invention;
FIG. 2 shows a block diagram of a radio module according to an embodiment of the invention;
FIG. 3 is a schematic timing diagram showing the transmitting and receiving activities of two radio modules according to an embodiment of the invention;
FIG. 4 is a schematic timing diagram showing the transmitting and receiving activities of two radio modules when the protection scheme is applied according to an embodiment of the invention;
FIG. 5 is a flow chart of a method for preventing IDC interference of a communications apparatus comprising more than one radio module according to an embodiment of the invention;
FIG. 6 is a timing diagram showing a plurality of configured sub-frames of the first radio module according to an embodiment of the invention;
FIG. 7 is a timing diagram showing a plurality of configured sub-frames of the first radio module according to another embodiment of the invention;
FIG. 8 is a timing diagram showing a plurality of configured sub-frames of the first radio module according to yet another embodiment of the invention;
FIG. 9 is a timing diagram showing a plurality of configured sub-frames of the first radio module according to still another embodiment of the invention;
FIG. 10 is a flow chart showing an exemplary procedure for determining whether to activate or deactivate the protection scheme according to an embodiment of the invention;
FIG. 11 is a timing diagram showing a plurality of configured sub-frames of the first radio module according to an embodiment of the invention;
FIG. 12 is a timing diagram showing a plurality of configured sub-frames of the first radio module according to another embodiment of the invention; and
FIG. 13 is a timing diagram showing a plurality of configured sub-frames of the first radio module according to yet another embodiment of the invention.

### DETAILED DESCRIPTION

The following description is of the best-contemplated mode of carrying out the invention. This description is made for the purpose of illustrating the general principles of the invention and should not be taken in a limiting sense. The scope of the invention is best determined by reference to the appended claims.

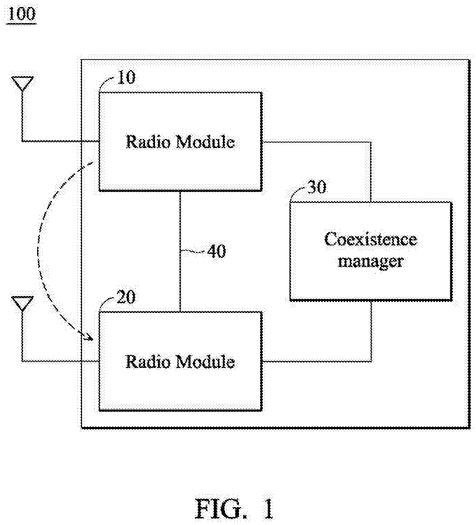

FIG. 1 shows a block diagram of a communications apparatus according to an embodiment of the invention. The communications apparatus 100 may comprise at least two radio modules 10 and 20 and a coexistence manager 30. The radio module 10 is arranged to provide a first wireless communications service and may communicate with a first peer communications device (for example, a base station, a node-B, an eNB, an access point, or the like) in a first wireless network in compliance with a first protocol of a first Radio Access Technology (RAT). The radio module 20 is arranged to provide a second wireless communications service and may communicate with a second peer communications device (for example, a base station, a node-B, an eNB, an access point, or the like) in a second wireless network in compliance with a second protocol of a second RAT. The coexistence manager 30 is coupled to the radio modules 10 and 20 and is arranged to manage coordination between the transceiving operations of the radio modules 10 and 20.

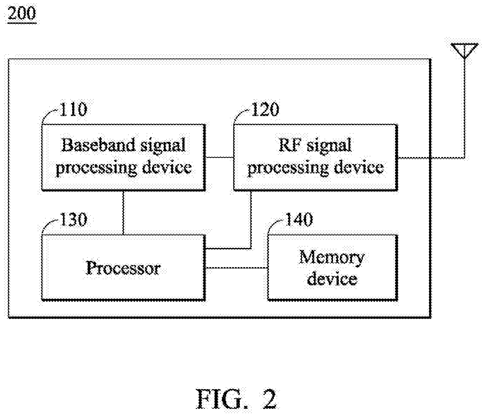

Note that in some embodiments of the invention, the communications apparatus 100 may also comprise more than two radio modules. In yet other embodiments of the invention, the coexistence manager 30 may be integrated in either of the radio modules 10 or 20. For example, the coexistence manager 30 may be integrated in the processor (e.g. the processor 130 shown in FIG. 2) of the radio module 10 or 20. Therefore, the architecture as shown in FIG. 1 is merely an example to give a clear illustration of the concept of the invention, and the invention should not be limited thereto. Note further that, in the embodiments of the invention, the radio modules 10 and 20 may be implemented in different chips and communicate with each other via a specific interface (such as the interface 40 shown in FIG. 1) disposed therebetween, or may be integrated into one chip, such as an SoC (system on chip), and connect to each other by internal wires. Therefore, the invention should not be limited to any specific implementation method.

In the embodiments of the invention, the communications apparatus 100 may be a notebook computer, a cellular phone, a portable gaming device, a portable multimedia player, a tablet computer, a Global Positioning System (GPS) receiver, a Personal Digital Assistant (PDA), or others. In addition, in the embodiments of the invention, the radio modules co-located in the communications apparatus may include a WiMAX module, a Wi-Fi module, a Bluetooth module, a 2G/3G/4G or LTE module, or others, for providing the corresponding communications services in compliance with the corresponding protocols.

FIG. 2 shows a block diagram of a radio module according to an embodiment of the invention. The radio module 200 may comprise at least a baseband signal processing device 110, a radio frequency (RF) signal processing device 120, a processor 130, a memory device 140, and an antenna module comprising at least one antenna. Note that, in order to clarify the concept of the invention, FIG. 2 presents a simplified block diagram in which only the elements relevant to the invention are shown. However, the invention should not be limited to what is shown in FIG. 2. For example, in some embodiments of the invention, the radio module 200 may further be extended to comprise more than one antenna, and the invention should not be limited to what is shown in FIG. 2.

The RF signal processing device 120 may receive RF signals via the antenna and process the received RF signals to convert the received RF signals to baseband signals to be processed by the baseband signal processing device 110, or receive baseband signals from the baseband signal processing device 110 and convert the received baseband signals to RF signals to be transmitted to a peer communications device. The RF signal processing device 120 may comprise a plurality of hardware elements to perform radio frequency conversion. For example, the RF signal processing device 120 may comprise a power amplifier, a mixer, or others.

The baseband signal processing device 110 may process (for example, decode and demodulate) the baseband signals corresponding to the RF signals processed by the RF signal processing device 120 to obtain information or data transmitted by the peer communications device, such as the system information carried by the peer communications device in the RF signals, and may process (for example, encode and modulate) uplink data to be transmitted to the peer communications device as the baseband signals and provide the baseband signals to the RF signal processing device 120. The baseband signal processing device 110 may also comprise a plurality of hardware elements to perform baseband signal processing. The baseband signal processing may comprise analog-to-digital conversion (ADC) / digital-to-analog conversion (DAC), gain adjustment, modulation/demodulation, encoding/decoding, and so on.

The processor 130 may control the operations of the baseband signal processing device 110, the RF signal processing device 120 and the memory device 140. According to an embodiment of the invention, the processor 130 may also be arranged to execute the program codes of the software module(s) of the corresponding baseband signal processing device 110 and/or the RF signal processing device 120. The program codes accompanied with specific data in a data structure may also be referred to as a processor logic unit or a stack instance when being executed. Therefore, the processor may be regarded as comprising a plurality of processor logic units, each for executing one or more specific functions or tasks of the corresponding software module(s). The memory device 140 may store the software and firmware program codes, system data, user data, etc. of the radio module 200.

According to an embodiment of the invention, in order to prevent IDC interference occurred to the radio modules comprised in the communications apparatus 100, such as the interference caused by the transmitting activities of the radio module 10 to the receiving activities of the radio module 20 as the dotted line shown in FIG. 1, one radio module may sacrifice the downlink throughput and stop receiving any data or signal from the corresponding wireless network for a predetermined duration.

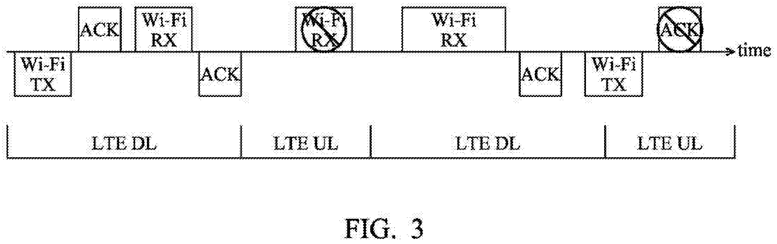

FIG. 3 is a schematic timing diagram showing the transmitting (TX) and receiving (RX) activities of two radio modules according to an embodiment of the invention. In this embodiment, a first radio module comprised in a communications apparatus (for example, the communications apparatus 100) is an LTE module and a second radio module comprised in the communications apparatus is a Wi-Fi module. Note that hereinafter, the LTE module and Wi-Fi module are merely used as an example to give a clear illustration of the concept of the invention, and the invention should not be limited thereto.

As shown in FIG. 3, the Wi-Fi module is free to perform its transmitting activities (labeled by Wi-Fi TX as shown) and receiving activities (labeled by Wi-Fi RX and acknowledgement (ACK) as shown) in the LTE downlink period (labeled by LTE DL as shown). In the LTE uplink period (labeled by LTE UL as shown), the Wi-Fi module preferably stops its receiving activities as shown in FIG. 3 to prevent the received signal or data from being interfered with by the LTE transmitting activities.

According to an embodiment of the invention, the second radio module (e.g. the Wi-Fi module) may transmit a predetermined message to the corresponding wireless network to activate a protection scheme. After transmitting the predetermined message to the corresponding wireless network, there is supposed to be no data or signal transmitted from a peer communications device associated with the second radio module to the second radio module. In this manner, the second radio module may stop its receiving activities without degrading future communication activities. Normally, peer communication device of the second radio module may reduce transmission rate if no response (i.e., ACK packet) is received.

According to an embodiment of the invention, the second radio module may initiate a clear to send to self (CTS2self) messaging procedure to activate the protection scheme, and the predetermined message may be a clear to send (CTS) message. According to another embodiment of the invention, the second radio module may transmit a power saving on message as the predetermined message to inform the peer communications device associated with the second radio module that the second radio module has entered a power save mode.

According to an embodiment of the invention, when the buffered data size of the first radio module is large or a predetermined duration for performing the protection scheme is long, the second radio module preferably transmits the power saving on message as the predetermined message. On the other hand, when the buffered data size of the first radio module is small or a predetermined duration for performing the protection scheme is short, the second radio module preferably transmits the CTS as the predetermined message. According to another embodiment of the invention, when the peer communications device associated with the second radio module cannot be aware of the second radio module entering the power save mode in time, the second radio module preferably transmits the CTS as the predetermined message. Otherwise, the second radio module preferably transmits the power saving on message as the predetermined message.

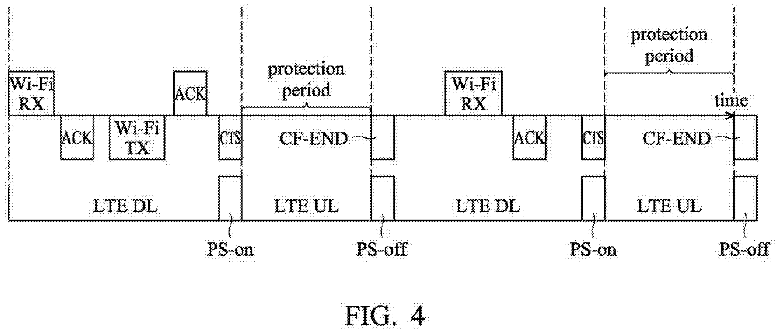

FIG. 4 is a schematic timing diagram showing the transmitting (TX) and receiving (RX) activities of two radio modules when the protection scheme is applied according to an embodiment of the invention. As shown in FIG. 4, the Wi-Fi module may transmit the CTS message or the power saving on (PS-on) message to the corresponding wireless network during the boundary between the LTE downlink period and LTE uplink period. After transmitting the CTS message or the PS-on message, a protection period may begin. For deactivating the protection scheme, the Wi-Fi module may transmit the contention free end (CF-END) message or the power saving on (PS-off) message to the corresponding wireless network.

However, the protection scheme may still cause undesirable throughput degradation of the second radio module. Therefore, in order to mitigate the throughput degradation of the second radio module, a predetermined time to activate the protection scheme is preferably intelligently determined. In the following paragraphs, several embodiments of determining predetermined time to activate the protection scheme, and further a predetermined duration for performing the protection scheme (that is, a length of the protection period as shown in FIG. 4) are discussed.

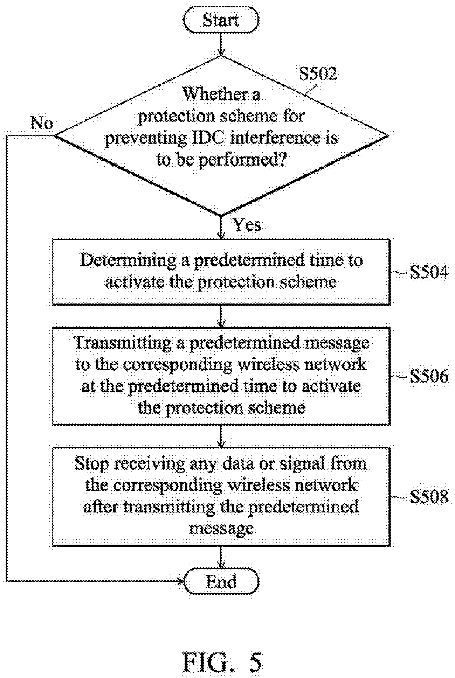

FIG. 5 is a flow chart of a method for preventing in device coexistence (IDC) interference of a communications apparatus comprising more than one radio module according to an embodiment of the invention. First of all, whether a protection scheme for preventing IDC interference is to be performed is determined (Step S502). The determination in step S502 may be made per sub-frame, or may be made once for a plurality of sub-frames, and the invention should not be limited thereto. When the protection scheme is determined not to be performed, the process ends. When the protection scheme is determined to be performed, a predetermined time to activate the protection scheme is further determined (Step S504). Next, a predetermined message is transmitted to a corresponding wireless network at the predetermined time to activate the protection scheme (Step S506). Finally, communications apparatus stops receiving any data or signals from the corresponding wireless network after transmitting the predetermined message (Step S508).

According to a first embodiment of the invention, the first radio module may determine whether the protection scheme is to be performed and the predetermined time to activate the protection scheme according to a sub-frame configuration of the first radio module. Take the LTE module as an example. One frame consists of downlink, special and uplink sub-frames, and the ratio of those sub-frames can be dynamically configured. There are many valid sub-frame configurations defined in LTE system.. The sub-frame configuration information may be obtained by system information block (SIB) decoding. Once the sub-frame configuration information is obtained, the locations of uplink sub-frames are known. Therefore, when an uplink sub-frame is about to come, the first radio module may determine that the protection scheme is to be performed in the forthcoming uplink sub-frame(s).

According to an embodiment of the invention, it is preferable that the second radio module transmits the predetermined message for activating the protection scheme before the uplink sub-frame. Since the first uplink sub-frame in a specific sub-frame configuration is always preceded by a special sub-frame, the predetermined time to activate the protection scheme preferably falls within a duration of a forthcoming special sub-frame, and the first radio module may inform the second radio module that it is suggested that the protection scheme be performed in a forthcoming uplink sub-frame, and that the predetermined time to activate the protection scheme falls within the duration of a forthcoming special sub-frame. Note that the forthcoming special sub-frame precedes the forthcoming uplink sub-frame.

According to an embodiment of the invention, the first radio module may inform the second radio module via a specific interface (such as the interface 40 shown in FIG. 1) disposed therebetween. Upon being informed, the second radio module may schedule the TX activity for transmitting the predetermined message at the predetermined time to activate the protection scheme. After the second radio module transmitting the predetermined message to the second wireless network at the predetermined time to activate the protection scheme, there is supposed to be no data or signal transmitted from a peer communications device associated with the second radio module to the second radio module. In this manner, the second radio module may stop its receiving activities.

According to a second embodiment of the invention, the first radio module may determine whether the protection scheme is to be performed according to a physical data control channel (PDCCH) decoding result of a downlink sub-frame n, where n is a positive integer. When the PDCCH decoding result of the downlink sub-frame n indicates that a uplink grant for granting uplink transmission in a following uplink sub-frame k is received, the first radio module determines that the protection scheme is to be performed in the uplink sub-frame k, where k is also a positive integer and k>n.

According to an embodiment of the invention, the predetermined time to activate the protection scheme may fall in a duration of the downlink sub-frame n. Since the PDCCH message is received in the first three OFDM symbols in a sub-frame and the PDCCH blind decoding is generally finished before the end of the sub-frame where the PDCCH message is received, the predetermined time to activate the protection scheme may fall in a duration of the downlink sub-frame n right after the PDCCH decoding result is obtained.

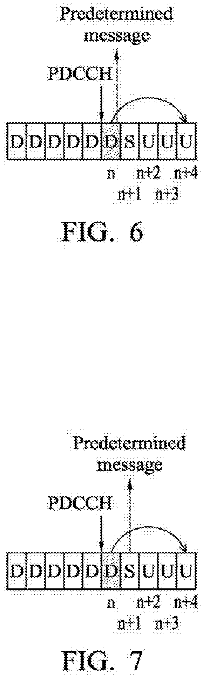

FIG. 6 is a timing diagram showing a plurality of configured sub-frames of the first radio module according to an embodiment of the invention. As shown in FIG. 6, when the PDCCH message is received in the downlink sub-frame n and the PDCCH decoding result of the downlink sub-frame n indicates that a uplink grant for granting uplink transmission is received, the first radio module may inform the second radio module that the protection scheme is to be performed in the uplink sub-frame (n+4) and the predetermined time to transmit the predetermined message to activate the protection scheme may fall in a duration of the downlink sub-frame n right after the PDCCH decoding result is obtained.

According to another embodiment of the invention, the predetermined time to activate the protection scheme may fall in a duration of a special sub-frame following the downlink sub-frame n.

FIG. 7 is a timing diagram showing a plurality of configured sub-frames of the first radio module according to another embodiment of the invention. As shown in FIG. 7, when the PDCCH message is received in the downlink sub-frame n and the PDCCH decoding result of the downlink sub-frame n indicates that a uplink grant for granting uplink transmission is received, the first radio module may inform the second radio module that the protection scheme is to be performed in the uplink sub-frame (n+4) and the predetermined time to transmit the predetermined message to activate the protection scheme may fall in a duration of the special sub-frame (n+1) following the downlink sub-frame.

According to yet another embodiment of the invention, when the PDCCH message is received in the downlink sub-frame n and the PDCCH decoding result of the downlink sub-frame n indicates that a uplink grant for granting uplink transmission in a following uplink sub-frame k is received, the predetermined time to activate the protection scheme may fall in a duration from the downlink sub-frame n to a following uplink sub-frame (k-1). Since it is preferable to transmit the predetermined message one sub-frame earlier before the granted uplink sub-frame k, the first radio module may inform the second radio module that the protection scheme is to be performed in the uplink sub-frame k and the predetermined time to transmit the predetermined message to activate the protection scheme may fall in a duration from the downlink sub-frame n to a following uplink sub-frame (k-1).

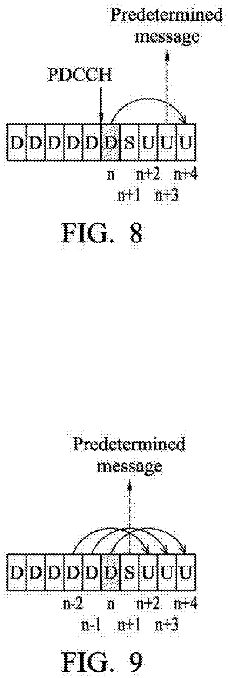

FIG. 8 is a timing diagram showing a plurality of configured sub-frames of the first radio module according to yet another embodiment of the invention. As shown in FIG. 8, when the PDCCH message is received in the downlink sub-frame n and the PDCCH decoding result of the downlink sub-frame n indicates that a uplink grant for granting uplink transmission in the uplink sub-frame (n+4) is received, the first radio module may inform the second radio module that the protection scheme is to be performed in the uplink sub-frame (n+4) and the predetermined time to transmit the predetermined message to activate the protection scheme may fall in a duration of the uplink sub-frame (n+3), which is one sub-frame earlier before the granted uplink sub-frame (n+4).

According to still another embodiment of the invention, the first radio module may further determine a predetermined duration for performing the protection scheme according to the PDCCH decoding results of a plurality of successive downlink sub-frames.

FIG. 9 is a timing diagram showing a plurality of configured sub-frames of the first radio module according to still another embodiment of the invention. In the embodiment of the invention, the first radio module may collect the PDCCH decoding results of a plurality of successive downlink sub-frames, determine a predetermined duration for performing the protection scheme according to the collected PDCCH decoding results, and inform the second radio module whether the protection scheme is to be performed, the predetermined duration for performing the protection scheme and the predetermined time to transmit the predetermined message to activate the protection scheme.

For example, when the PDCCH decoding results of the successive downlink sub-frames (n-2)∼n all indicate that uplink grants are received in the corresponding downlink sub-frame for the uplink sub-frames (n+2)∼(n+4), the predetermined duration for performing the protection scheme is from the uplink sub-frame (n+2) to the uplink sub-frame (n+4). The first radio module may inform the second radio module that the protection scheme is to be performed from the uplink sub-frame (n+2), the predetermined duration for performing the protection scheme is about two sub-frames and the predetermined time to transmit the predetermined message to activate the protection scheme may fall in a duration of the downlink sub-frame n, a special sub-frame (n+1) following the successive downlink sub-frames (n-2)∼n, which is also one sub-frame earlier before the earliest granted uplink sub-frame (n+2).

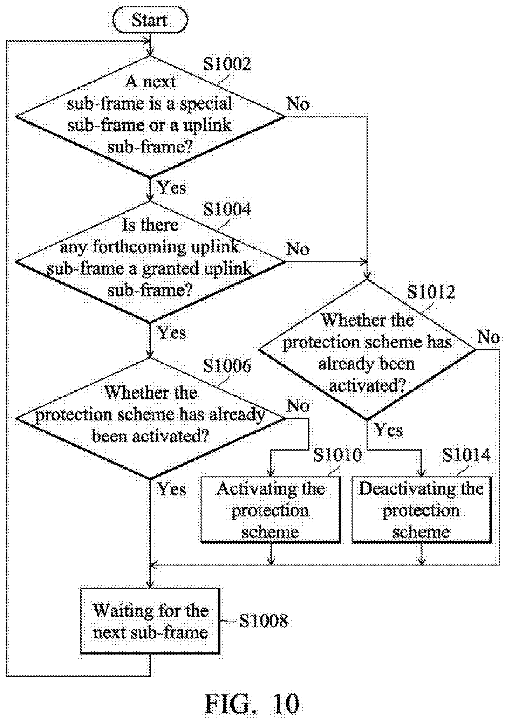

FIG. 10 is a flow chart showing an exemplary procedure for determining whether to activate or deactivate the protection scheme according to an embodiment of the invention. In this embodiment, the procedure is performed each sub-frame. At the beginning of each sub-frame, the first radio module determines whether a next sub-frame is a special sub-frame or a uplink sub-frame (Step S1002). When a next sub-frame is a special sub-frame or a uplink sub-frame, the first radio module further determines is there any following uplink sub-frame a granted uplink sub-frame (Step S1004). Here, a granted uplink sub-frame k means that there is a uplink grant received in a previous downlink sub-frame, such as a previous downlink sub-frame (k-4) or even before, where k is a positive integer. When there is any following uplink sub-frame a granted uplink sub-frame, the first radio module determines whether the protection scheme has already been activated by the second radio module (Step S1006).

When the protection scheme has been activated, the first radio module does nothing but wait for the next sub-frame (Step S1008) and the procedure returns to step S1002. When the protection scheme has not been activated, the first radio module informs the second radio module to schedule a TX activity to transmit the predetermined message to activate the protection scheme (Step S1010). After that, the first radio module waits for the next sub-frame (Step S1008) and the procedure returns to step S1002. The first radio module may inform the second radio module the predetermined time to activate the protection scheme and the predetermined duration for performing the protection scheme as discussed above.

When the next sub-frame is not a special sub-frame or a uplink sub-frame, or when there is no following uplink sub-frame that is a granted uplink sub-frame, the first radio module further determines whether the protection scheme has already been activated by the second radio module (Step S1012). When the protection scheme has been activated, the first radio module may inform the second radio module to schedule another TX activity to transmit another predetermined message to deactivate the protection scheme (Step S1014). After that, the first radio module waits for the next sub-frame (Step S1008) and the procedure returns to step S1002. When the protection scheme has not been activated, the first radio module does nothing but waiting for the next sub-frame (Step S 1008) and the procedure returns to the step S1002.

As discussed above, after the second radio module transmits the predetermined message to the second wireless network at the predetermined time to activate the protection scheme, there is supposed to be no data or signal transmitted from a peer communications device associated with the second radio module to the second radio module. In this manner, the second radio module may stop its receiving activities.

According to an embodiment of the invention, since the locations of the downlink, special and uplink sub-frames are known as the sub-frame configuration of the first radio module is obtained, the second radio module may also schedule the TX activities for transmitting the predetermined message in advance. For example the second radio module may schedule the TX activities for transmitting the predetermined message at any possible predetermined time as the embodiments illustrated above in advance. The scheduled TX activities may further be enabled or cancelled upon receiving the run time indication from the first radio module.

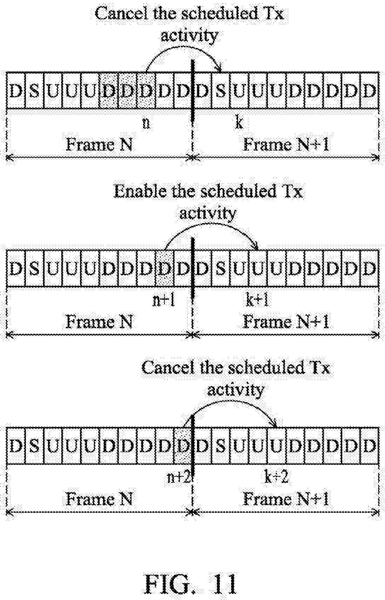

FIG. 11 is a timing diagram showing a plurality of configured sub-frames of the first radio module according to an embodiment of the invention. In the embodiment, the TX activities for transmitting the predetermined message to activate the protection scheme are scheduled in advance at least one sub-frame earlier for every uplink sub-frame that is possibly granted.

Suppose that there is no PDCCH message received in the downlink sub-frame n or the PDCCH decoding result of the downlink sub-frame n indicates that there is no uplink grant received, the first radio module may real-time inform the second radio module to cancel the scheduled TX activity for transmitting the predetermined message to activate the protection scheme for a corresponding uplink sub-frame k. When the PDCCH decoding result of the downlink sub-frame (n+1) indicates that the uplink grant for granting uplink transmission in a following uplink sub-frame (k+1) is received, the first radio module may run time inform the second radio module to enable the scheduled TX activity for transmitting the predetermined message to activate the protection scheme for the uplink sub-frame (k+1) (or, the first radio module may also not inform the second radio module since the TX activity is already scheduled, depending on different ways of implementation). Similarly, when there is no PDCCH message received in the downlink sub-frame (n+2) or the PDCCH decoding result of the downlink sub-frame (n+2) indicates that there is no uplink grant received, the first radio module may run time inform the second radio module to cancel the scheduled TX activity for transmitting the predetermined message to activate the protection scheme for a corresponding uplink sub-frame (k+2).

According to a third embodiment of the invention, the first radio module may determine whether the protection scheme is to be performed according to a Discontinuous Reception (DRX) cycle configured for the first radio module. When a downlink sub-frame n configured for the first radio module falls in a DRX on duration and a PDCCH decoding result of the downlink sub-frame n indicates that a uplink grant for granting uplink transmission in a following uplink sub-frame k is received, the first radio module determines that the protection scheme is to be performed in the following uplink sub-frame k, where n and k are positive integers and k>n. The predetermined time to activate the protection scheme falls in a duration from the downlink sub-frame n to a following uplink sub-frame (k-1) as discussed above. After the second radio module transmitting the predetermined message to the second wireless network at the predetermined time to activate the protection scheme, it is supposed to be no data or signal transmitted from a peer communications device associated with the second radio module to the second radio module. In this manner, the second radio module may stop its receiving activities.

On the other hand, when the downlink sub-frame n falls in a DRX off duration, since the first radio module does not have to monitor the PDCCH message in a DRX off duration, the first radio module determines that the protection scheme is not to be performed in a following uplink sub-frame k corresponding to the downlink sub-frame n. Here, the uplink sub-frame k corresponding to the downlink sub-frame n means that the uplink grant of the uplink sub-frame k is scheduled to be carried in the downlink sub-frame n.

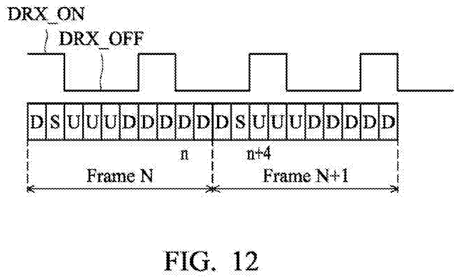

FIG. 12 is a timing diagram showing a plurality of configured sub-frames of the first radio module according to another embodiment of the invention. As shown in FIG. 12, when the downlink sub-frame n falls in a DRX off duration (labeled by DRX OFF), the first radio module determines that the protection scheme is not to be performed in a following uplink sub-frame (n+4) corresponding to the downlink sub-frame n, even if the uplink sub-frame (n+4) falls in a DRX on duration (labeled by DRX ON).

According to a fourth embodiment of the invention, the first radio module may determine whether the protection scheme is to be performed according to a measurement gap pattern configured for the first radio module for measuring one or more measurement objects. When a downlink sub-frame n configured for the first radio module falls in a measurement gap, the first radio module determines that the protection scheme is not to be performed in a following uplink sub-frame k corresponding to the downlink sub-frame n, since the first radio module does not have to monitor the PDCCH message in a measurement gap. Here, the uplink sub-frame k corresponding to the downlink sub-frame n means that the uplink grant of the uplink sub-frame k is scheduled to be carried in the downlink sub-frame n.

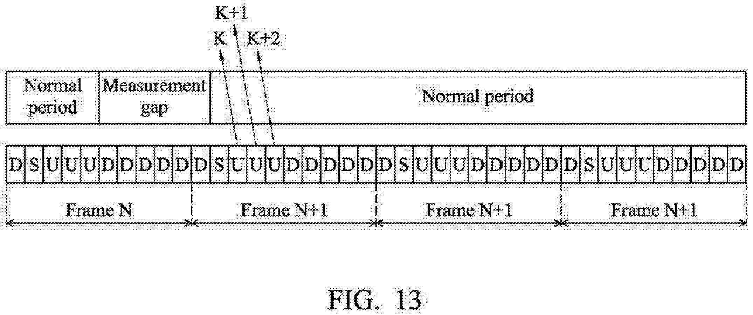

FIG. 13 is a timing diagram showing a plurality of configured sub-frames of the first radio module according to yet another embodiment of the invention. As shown in FIG. 13, the first radio module determines that the protection scheme is not to be performed in the uplink sub-frames k, (k+1) and (k+2) since the preceding downlink sub-frames corresponding to the uplink sub-frames k, (k+1) and (k+2) all fall in a measurement gap.

According to a fifth embodiment of the invention, the first radio module may determine whether the protection scheme is to be performed according to a semi-persistent scheduling (SPS) configured for the first radio module. When SPS is configured, the first radio module may be aware of the uplink grant in advance. Therefore, the first radio module may know exactly if there is any uplink transmission in the forthcoming uplink sub-frame. In this manner, the first radio module may determine whether the protection scheme is to be performed based on the configured SPS.

According to a sixth embodiment of the invention, the first radio module may determine whether the protection scheme is to be performed according to a hybrid automatic repeat request (HARQ) operation of the first radio module. When an acknowledge (ACK) for an HARQ operation is received in a downlink sub-frame n configured for the first radio module and no PDCCH message is received in the downlink sub-frame n, the first radio module may determine that the protection scheme is not to be performed in a following uplink sub-frame k corresponding to the downlink sub-frame n. Here, the uplink sub-frame k corresponding to the downlink sub-frame n means that the uplink grant of the uplink sub-frame k is scheduled to be carried in the downlink sub-frame n.

In the embodiments of the invention, the first radio module may transmit its scheduling information and sub-frame configuration to the second radio module via the interface disposed therebetween to implement the methods and embodiments as discussed above, and the time coordination between the first radio module and the second radio module may be performed to synchronize the timing of the first radio module and the second radio module.

While the invention is been described by way of example and in terms of preferred embodiment, it is to be understood that the invention is not limited thereto. Those who are skilled in this technology can still make various alterations and modifications.

## Claims

1. A communications apparatus for preventing in device coexistence, IDC, interference (100), comprising:
a first radio module (10), providing a first wireless communications service in a first wireless network in compliance with a first protocol; and
a second radio module (20), providing a second wireless communications service in a second wireless network in compliance with a second protocol,
wherein the first radio module (10) is configured to determine whether a protection scheme is to be performed, and when the first radio module is configured to determine that the protection scheme is to be performed, the first radio module is further configured to determine a predetermined time to activate the protection scheme,
**characterized in that** the second radio module (20) is configured to transmit a predetermined message to the second wireless network at the predetermined time to activate the protection scheme, and
wherein the first radio module (10) is configured to determine whether the protection scheme is to be performed and the predetermined time to activate the protection scheme, according to a sub-frame configuration of the first radio module, and wherein the predetermined time to activate the protection scheme falls in a duration of a special sub-frame configured for the first radio module.

2. The communications apparatus (100) as claimed in claim 1, wherein the second radio module (20) is configured to stop receiving any data or signal from the second wireless network after transmitting the predetermined message.

3. The communications apparatus (100)as claimed in claim 2, wherein after transmitting the predetermined message to the second wireless network, there is no data or signal received from a peer communications device associated with the second radio module (20) to the second radio module.

4. The communications apparatus (100) as claimed in claim 1, wherein the predetermined message is a clear to send, CTS, message, or
wherein the predetermined message is a power saving on message to inform a peer communications device associated with the second radio module (20) that the second radio module enters a power save mode.

5. The communications apparatus (100) as claimed in claim 1,
wherein determination of whether the protection scheme is to be performed is performed according to a physical data control channel, PDCCH, decoding result of a downlink sub-frame n, where n is a positive integer, and when the PDCCH decoding result of the downlink sub-frame n indicates that an uplink grant for granting uplink transmission is received, the first radio module is configured to determine that the protection scheme is to be performed.

6. The communications apparatus (100) as claimed in claim 5, wherein when determination of whether the protection scheme is to be performed is performed according to a physical data control channel (PDCCH) decoding result of a downlink sub-frame n, the predetermined time to activate the protection scheme falls in the downlink sub-frame n, or
wherein the predetermined time to activate the protection scheme falls in a duration of a special sub-frame following the downlink sub-frame n.

7. The communications apparatus (100) as claimed in claim 5, wherein when determination of whether the protection scheme is to be performed is performed according to a physical data control channel (PDCCH) decoding result of a downlink sub-frame n and when the PDCCH decoding result of the downlink sub-frame n indicates that the uplink grant for granting uplink transmission in a following uplink sub-frame k is received, where k is a positive integer and k > n, the predetermined time to activate the protection scheme falls in a duration from the downlink sub-frame n to a following uplink sub-frame (k-1).

8. The communications apparatus (100) as claimed in claimed in claim 5, wherein when determination of whether the protection scheme is to be performed is performed according to a physical data control channel (PDCCH) decoding result of a downlink sub-frame n, the first radio module (10) is further configured to determine a predetermined duration for performing the protection scheme according to the PDCCH decoding results of a plurality of successive downlink sub-frames.

9. The communications apparatus (100) as claimed in claim 1, wherein when determination of whether the protection scheme is to be performed is performed according to a Discontinuous Reception, DRX, cycle configured for the first radio module, and when a downlink sub-frame n configured for the first radio module falls in a DRX on duration and a PDCCH decoding result of the downlink sub-frame n indicates that a uplink grant for granting uplink transmission in a following uplink sub-frame k is received, the first radio module (10) is configured to determine that the protection scheme is to be performed, where n and k are positive integers and k > n.

10. The communications apparatus (100) as claimed in claim 9, wherein when determination of whether the protection scheme is to be performed is performed according to a Discontinuous Reception (DRX) cycle configured for the first radio module, the predetermined time to activate the protection scheme falls in a duration from the downlink sub-frame n to a following uplink sub-frame k-1.

11. The communications apparatus (100) as claimed in claim 8, wherein when determination of whether the protection scheme is to be performed is performed according to a Discontinuous Reception (DRX) cycle configured for the first radio module and when the downlink sub-frame n falls in a DRX off duration, the first radio module is configured to determine that the protection scheme is not to be performed in the following uplink sub-frame k.

12. The communications apparatus (100) as claimed in claim 1, wherein when determination of whether the protection scheme is to be performed is performed according to a measurement gap pattern configured for the first radio module for measuring one or more measurement objects, and wherein when a downlink sub-frame n configured for the first radio module falls in a measurement gap, the first radio module (10) is configured to determine that the protection scheme is not to be performed in a following uplink sub-frame k, where n and k are positive integers and k>n.

13. The communications apparatus (100) as claimed in claim 1,
wherein when determination of whether the protection scheme is to be performed is performed according to a hybrid automatic repeat request, HARQ, operation of the first radio module, and wherein when an acknowledge, ACK, is received in a downlink sub-frame n configured for the first radio module and no PDCCH message is received in the downlink sub-frame n, the first radio module (10) is configured to determine that the protections scheme is not to be performed in a following uplink sub-frame k, where n and k are positive integers and k>n.

14. A method for preventing in device coexistence, IDC, interference of a communications apparatus (100) comprising at least a first radio module (10) providing a first wireless communications service in a first wireless networking compliance with a first protocol and a second radio module (20) providing a second wireless communications service in a second wireless networking compliance with a second protocol, the method comprising:
determining whether a protection scheme for preventing IDC interference is to be performed (S502); and
determining a predetermined time to activate the protection scheme when the protection scheme is determined to be performed (S504);
**characterized by** the further steps of:
transmitting a predetermined message to the second wireless network at the predetermined time to activate the protection scheme (S506),
wherein whether the protection scheme is to be performed and the predetermined time to activate the protection scheme are determined according to a sub-frame configuration of the first radio module (10), and wherein the predetermined time to activate the protection scheme falls in a duration of a special sub-frame configured for the first radio module.

15. The method as claimed in claim 14, further comprising:
stopping to receive any data or signal from the second wireless network after transmitting the predetermined message (S508).

16. The method as claimed in claim 14, wherein the predetermined message is a clear to send, CTS, message, or
wherein the predetermined message is a power saving on message to inform a peer communications device associated with the second radio module (20) that the second radio module enters a power save mode.

17. The method as claimed in claim14 wherein when whether the protection scheme is to be performed is determined according to a physical data control channel, PDCCH, decoding result of a downlink sub-frame n, where n is a positive integer, and wherein when the PDCCH decoding result of the downlink sub-frame n indicates that a uplink grant for granting uplink transmission is received, the protection scheme is determined to be performed.

18. The method as claimed in claim 17, wherein when the PDCCH decoding result of the downlink sub-frame n indicates that an uplink grant for granting uplink transmission in a following uplink sub-frame k is received,' the predetermined time to activate the protection scheme falls in a duration from the downlink sub-frame n to a following uplink sub-frame (k-1), where k is a positive integer and k > n,
in particular the method further comprising:
determining a predetermined duration for performing the protection scheme according to the PDCCH decoding results of a plurality of successive downlink sub-frames.

19. The method as claimed in claim 14, wherein when whether the protection scheme is to be performed is determined according to a Discontinuous Reception (DRX) cycle configured for the first radio module, (10) and wherein when a downlink sub-frame n configured for the first radio module falls in a DRX off duration, the protection scheme is determined not to be performed in a following uplink sub-frame k, where n is a positive integer, where n and k are positive integers .and k>n, or
wherein when whether the protection scheme is to be performed is determined according to a measurement gap pattern configured for the first radio module (10) for measuring one or more measurement objects, and wherein when a downlink sub-frame n configured for the first radio module falls in a measurement gap, the protection scheme is determined not to be performed in a following uplink sub-frame k, where n and k are positive integers and k > n,
or
wherein when whether the protection scheme is to be performed is determined according to a hybrid automatic repeat request (HARQ) operation of the first radio module (10), and wherein when an acknowledge (ACK) is received in a downlink sub-frame n configured for the first radio module and no PDCCH message is received in the downlink sub-frame n, the protection scheme is determined not to be performed in a following uplink sub-frame k, where n and k are positive integers and k>n.

## Patentansprüche

1. Kommunikationsvorrichtung zur Verhinderung von Im-Gerät-Koexistenz-, IDC-, Interferenz (100), umfassend:
ein erstes Funkmodul (10), das einen ersten drahtlosen Kommunikationsdienst in einem ersten drahtlosen Netzwerk in Übereinstimmung mit einem ersten Protokoll bereitstellt; und
ein zweites Funkmodul (20), das einen zweiten drahtlosen Kommunikationsdienst in einem zweiten drahtlosen Netzwerk in Übereinstimmung mit einem zweiten Protokoll bereitstellt,
wobei das erste Funkmodul (10) konfiguriert ist, um zu bestimmen, ob ein Schutzschema durchgeführt werden soll, und wenn das erste Funkmodul konfiguriert ist, um zu bestimmen, dass das Schutzschema durchgeführt werden soll, ist das erste Funkmodul ferner konfiguriert, um eine vorbestimmte Zeit zu bestimmen, um das Schutzschema zu aktivieren,
**dadurch gekennzeichnet, dass**
das zweite Funkmodul (20) konfiguriert ist, um eine vorbestimmte Nachricht an das zweite drahtlose Netzwerk zu der vorbestimmten Zeit zu senden, um das Schutzschema zu aktivieren, und
wobei das erste Funkmodul (10) konfiguriert ist, um zu bestimmen, ob das Schutzschema durchgeführt werden soll und die vorbestimmte Zeit zum Aktivieren des Schutzschemas gemäß einer Unterrahmenkonfiguration des ersten Funkmoduls, und wobei die vorbestimmte Zeit zum Aktivieren des Schutzschemas in eine Zeitdauer eines speziellen Unterrahmens fällt, der für das erste Funkmodul konfiguriert ist.

2. Kommunikationsvorrichtung (100) nach Anspruch 1, wobei das zweite Funkmodul (20) konfiguriert ist, den Empfang von Daten oder Signalen von dem zweiten drahtlosen Netzwerk anzuhalten, nachdem die vorbestimmte Nachricht gesendet wurde.

3. Kommunikationsvorrichtung (100) nach Anspruch 2, wobei nach dem Senden der vorbestimmten Nachricht an das zweite drahtlose Netzwerk, es keine Daten oder Signale gibt, die von einer Peer-Kommunikationseinrichtung empfangen werden, die dem zweiten Funkmodul (20) zugeordnet ist, an das zweite Funkmodul.

4. Kommunikationsvorrichtung (100) nach Anspruch 1, wobei die vorbestimmte Nachricht ist eine klar zu sendende, CTS-, Nachricht ist, oder wobei die vorbestimmte Nachricht eine Energiespar-Anschalt-Nachricht ist, um eine Peer-Kommunikationseinrichtung, die dem zweiten Funkmodul (20) zugeordnet ist, zu informieren, dass das zweite Funkmodul in den Energiesparmodus wechselt.

5. Kommunikationsvorrichtung (100) nach Anspruch 1, wobei, wenn die Bestimmung, ob das Schutzschema durchgeführt werden soll, gemäß einem physikalischen Datensteuerungskanal-, PDCCH-, Dekodierergebnis eines Downlink-Unterrahmens n durchgeführt wird, wobei n eine positive ganze Zahl ist, und wobei wenn das PDCCH-Dekodierergebnis des Downlink-Unterrahmens n anzeigt, dass ein Uplink-Bewilligung zur Bewilligung einer Uplinkübertragung empfangen wird, das erste Funkmodul konfiguriert ist, um zu bestimmen, dass das Schutzschema durchgeführt werden soll.

6. Kommunikationsvorrichtung (100) nach Anspruch 5, wobei, wenn die Bestimmung, ob das Schutzschema durchgeführt werden soll, gemäß einem physikalischen Datensteuerungskanals- (PDCCH-) Dekodierergebnis eines Downlink-Unterrahmens n durchgeführt wird, die vorbestimmte Zeit zur Aktivierung des Schutzschemas in den Downlink-Unterrahmen n fällt, oder wobei die vorbestimmte Zeit zum Aktivieren des Schutzschemas in eine Zeitdauer eines speziellen Unterrahmens nachfolgend dem Downlink-Unterrahmen n fallt.

7. Kommunikationsvorrichtung (100) nach Anspruch 5, wobei wenn die Bestimmung, ob das Schutzschema durchgeführt werden soll, gemäß einem physikalischen Datensteuerungskanal- (PDCCH-) Dekodierergebnis eines Downlink-Unterrahmens n durchgeführt wird, und wenn das PDCCH-Dekodierergebnis des Downlink-Unterrahmens n anzeigt, dass die Uplink-Bewilligung für die Bewilligung der Uplinkübertragung in einem nachfolgenden Uplink-Unterrahmen k empfangen wird, wobei k eine positive ganze Zahl und k > n ist, die vorbestimmte Zeit zur Aktivierung des Schutzschemas in eine Zeitdauer von dem Downlink-Unterrahmen n zu einem nachfolgenden Uplink-Unterrahmen (k-1) fällt.

8. Kommunikationsvorrichtung (100) nach Anspruch 5, wobei, wenn die Bestimmung, ob das Schutzschema durchgeführt werden soll, gemäß einem physikalischen Datensteuerungskanal- (PDCCH-) Dekodierungsergebnis eines Downlink-Unterrahmens n durchgeführt wird, das erste Funkmodul (10) ferner konfiguriert ist, um eine vorbestimmte Zeitdauer für die Durchführung des Schutzschemas gemäß den PDCCH-Dekodierungsergebnissen von einer Vielzahl von aufeinanderfolgenden Downlink-Unterrahmen zu bestimmen.

9. Kommunikationsvorrichtung (100) nach Anspruch 1, wobei, wenn die Bestimmung, ob das Schutzschema durchgeführt werden soll, gemäß einem für das erste Funkmodul konfigurierten Discontinuous-Reception-, DRX-, Zyklus durchgeführt wird, und wenn ein Downlink-Unterrahmen n, der für das erste Funkmodul konfiguriert ist, in eine DRX-Anschalt-Zeitdauer fällt und ein PDCCH-Decodierergebnis des Downlink-Unterrahmens n anzeigt, dass eine Uplink-Bewilligung für die Bewilligung von Uplink-Übertragung in einem nachfolgenden Uplink-Unterrahmen k empfangen wird, wird das erste Funkmodul (10) konfiguriert, um zu bestimmen, dass das Schutzschema durchgeführt werden soll, wobei n und k positive ganze Zahlen sind und k > n ist.

10. Kommunikationsvorrichtung (100) nach Anspruch 9, wobei, wenn die Bestimmung, ob das Schutzschema durchgeführt werden soll, gemäß einem für das erste Funkmodul konfigurierten Discontinuous-Reception- (DRX)-Zyklus durchgeführt wird, die vorbestimmte Zeit zur Aktivierung des Schutzschemas in eine Zeitdauer von dem Downlink-Unterrahmen n zu einem nachfolgenden Uplink-Unterrahmen k-1 fällt.

11. Kommunikationsvorrichtung (100) nach Anspruch 8, wobei, wenn die Bestimmung, ob das Schutzschema durchgeführt werden soll, gemäß einem für das erste Funkmodul konfigurierten Discontinuous-Reception- (DRX)-Zyklus durchgeführt wird, und wenn der Downlink-Unterrahmen n in eine DRX-Ausschalt-Zeitdauer fällt, das erste Funkmodul konfiguriert ist, um zu bestimmen, dass das Schutzschema nicht in dem folgenden Uplink-Unterrahmen k durchgeführt werden soll.

12. Kommunikationsvorrichtung (100) nach Anspruch 1, wobei, wenn die Bestimmung, ob das Schutzschema durchgeführt werden soll, gemäß einem für das erste Funkmodul konfiguriertem Messungslücken-Muster zum Messen einer oder mehrerer Messobjekte durchgeführt wird, und wobei, wenn ein Downlink-Unterrahmen n, der für das erste Funkmodul konfiguriert ist, in eine Messlücke fallt, wird das erste Funkmodul (10) konfiguriert, um zu bestimmen, dass das Schutzschema nicht in einem nachfolgenden Uplink-Unterrahmen k durchgeführt werden soll, wobei n und k positive ganze Zahlen sind und k>n ist.

13. Kommunikationsvorrichtung (100) nach Anspruch 1, wobei, wenn die Bestimmung, ob das Schutzschema durchgeführt werden soll, gemäß einem hybriden automatischen Wiederholungsanforderungs-, HARQ-, Betrieb des ersten Funkmodul durchgeführt wird, und wobei, wenn eine Bestätigung, ACK, in einem Downlink-Unterrahmen empfangen wird, der für das erste Funkmodul konfiguriert ist, und wenn keine PDCCH-Nachricht in dem Downlink-Unterrahmen n empfangen wird, das erste Funkmodul (10) konfiguriert ist, um zu bestimmen, dass das Schutzschema nicht in einem nachfolgenden Uplink-Unterrahmen k durchgeführt werden soll, wobei n und k positive ganze Zahlen sind und k>n ist.

14. Verfahren zur Verhinderung von Im-Gerät-Koexistenz-, IDC-, Interferenz einer Kommunikationsvorrichtung (100) mit mindestens einem ersten Funkmodul (10), das einen ersten drahtlosen Kommunikationsdienst in einem ersten drahtlosen Netzwerk in Übereinstimmung mit einem ersten Protokoll bereitstellt, und mit einem zweiten Funkmodul (20), das einen zweiten drahtlosen Kommunikationsdienst in einem zweiten drahtlosen Netzwerk in Übereinstimmung mit einem zweiten Protokoll bereitstellt, wobei das Verfahren umfasst:
Bestimmen, ob ein Schutzschema zur Verhinderung von IDC-Interferenz durchgeführt werden soll (S502); und
Bestimmen einer vorbestimmten Zeit zur Aktivierung des Schutzschemas, wenn bestimmt wird, dass das Schutzschema durchgeführt werden soll (S504); **gekennzeichnet durch** die weiteren Schritte von:
Senden einer vorbestimmten Nachricht an das zweite drahtlose Netzwerk zu der vorbestimmten Zeit, um das Schutzschema (S506) zu aktivieren,
wobei ob das Schutzschema durchgeführt werden soll und die vorbestimmte Zeit zur Aktivierung des Schutzschemas bestimmt werden gemäß einer Unterrahmenkonfiguration des ersten Funkmoduls (10), und wobei die vorbestimmte Zeit zur Aktivierung des Schutzschemas in eine Zeitdauer eines speziellen Unterrahmens fällt, der für das erste Funkmodul konfiguriert ist.

15. Verfahren nach Anspruch 14, ferner umfassend:
Anhalten des Empfangens von Daten oder Signalen von dem zweiten drahtlosen Netzwerk, nach dem Senden der vorbestimmten Nachricht (S508).

16. Verfahren nach Anspruch 14, wobei die vorbestimmte Nachricht eine klar zu sendende, CTS-, Nachricht ist, oder wobei die vorbestimmte Nachricht eine Energiespar-Anschalt-Nachricht ist, um eine Peer-Kommunikationseinrichtung, die dem zweiten Funkmodul (20) zugeordnet ist, zu informieren, dass das zweite Funkmodul in den Energiesparmodus wechselt.

17. Verfahren nach Anspruch 14, wobei, wenn die Bestimmung, ob das Schutzschema durchgeführt werden soll, gemäß einem physikalischen Datensteuerungskanal-, PDCCH-, Dekodierergebnis eines Downlink-Unterrahmens n durchgeführt wird, wobei n eine positive ganze Zahl ist, und wobei, wenn das PDCCH-Dekodierergebnis des Downlink-Unterrahmens n anzeigt, dass ein Uplink-Bewilligung zur Bewilligung einer Uplinkübertragung empfangen wird, das Schutzschema bestimmt wird, durchgeführt zu werden.

18. Verfahren nach Anspruch 17, wobei, wenn das PDCCH-Dekodierungsergebnis von dem Downlink-Unterrahmen n anzeigt, dass eine Uplink-Bewilligung für die Bewilligung einer Uplink-Übertragung in einem nachfolgenden Uplink-Unterrahmen k empfangen wird, die vorbestimmte Zeit zum Aktivieren des Schutzschemas in eine Zeitdauer vom Downlink-Unterrahmen n zu einem folgenden Uplink-Unterrahmen (k-1) fäält, wobei k eine positive ganze Zahl und k > n ist, wobei das Verfahren insbesondere ferner umfasst:
Bestimmen einer vorbestimmten Zeitdauer für die Durchführung des Schutzschemas gemäß den PDCCH-Dekodierungsergebnissen einer Vielzahl von aufeinanderfolgenden Downlink-Unterrahmen.

19. Verfahren nach Anspruch 14, wobei, wenn das durchzuführende Sicherungsschema gemäß einem Discontinuous-Reception- (DRX-) Zyklus bestimmt wird, der für das erste Funkmodul (10) konfiguriert ist, und wobei, wenn ein Downlink-Unterrahmen n, der für das erste Funkmodul konfiguriert ist, in eine DRX-Ausschalt-Zeitdauer fällt, das Schutzschema bestimmt wird, nicht in einem nachfolgenden Uplink-Unterrahmen k durchgeführt zu werden, wobei n eine positive ganze Zahl ist, wobei n und k positive ganze Zahlen sind und k>n ist, oder
wobei, wenn das durchzuführende Schutzschema gemäß einem für das erste Funkmodul konfiguriertem Messungslücken-Muster zum Messen einer oder mehrerer Messobjekte durchgeführt wird, und wobei, wenn ein Downlink-Unterrahmen n, der für das erste Funkmodul konfiguriert ist, in eine Messlücke fällt, das Schutzschema bestimmt wird, nicht in einem nachfolgenden Uplink-Unterrahmen k durchgeführt zu werden, wobei n und k positive ganze Zahlen sind und k>n ist, oder
wobei, wenn das durchzuführende Schutzschema gemäß einer hybriden automatischen Wiederholungsanforderung (HARQ) des ersten Funkmoduls (10) bestimmt wird, und wobei, wenn eine Bestätigung (ACK) in einem für das erste Funkmodul konfigurierten Downlink-Unterrahmen n empfangen wird und keine PDCCH-Nachricht in dem Downlink-Unterrahmen n empfangen wird, das Schutzschema bestimmt wird, nicht in einem nachfolgenden Uplink-Unterrahmen k durchgeführt zu werden, wobei n und k positive ganze Zahlen und k>n sind.

## Revendications

1. Un appareil de communication pour la suppression d'interférence de coexistence de dispositif (100), IDC, comprenant:
un premier module radio (10), fournissant un premier service de communication sans fil au sein d'un premier réseau sans fil suivant un premier protocole; et
un second module radio (20), fournissant un second service de communication sans fil au sein d'un second réseau sans fil suivant un second protocole,
dans lequel le premier module radio (10) est configuré pour déterminer si un schéma de protection doit être exécuté, et quand le premier module radio est configuré pour déterminer que le schéma de protection doit être exécuté, le premier module radio est configuré en outre pour déterminer un instant prédéterminé pour activer le schéma de protection,
**caractérisé en ce que**
le second module radio (20) est configuré pour transmettre un message prédéterminé au second réseau sans fil au moment de l'instant prédéterminé d'activation du schéma de protection, et
dans lequel le premier module radio (10) est configuré pour déterminer si le schéma de protection est à exécuter et l'instant prédéterminé pour activer le schéma de protection, suivant une configuration de sous-trame du premier module radio, et dans lequel l'instant prédéterminé pour activer le schéma de protection tombe à l'intérieur d'une durée de la sous-trame spécifique configuré pour le premier module radio.

2. L'appareil de communication (100) tel que revendiqué dans la revendication 1,
dans lequel le second module radio (20) est configuré pour arrêter de recevoir des données ou des signaux provenant du second réseau sans fil après avoir transmis le message prédéterminé.

3. L'appareil de communication (100) tel que revendiqué dans la revendication 2,
dans lequel, après la transmission du message prédéterminé au second réseau sans fil, il n'y a aucune donnée ou signal reçu d'un dispositif de communication homologue associé au second module radio (20) vers le second module radio.

4. L'appareil de communication (100) tel que revendiqué dans la revendication 1,
dans lequel le message prédéterminé est un message clair à envoyer (CTS), ou dans lequel le message prédéterminé est un message d'économie d'énergie destiné à informer un dispositif de communication homologue associé au second module radio (20) que le second module radio passe en mode d'économie d'énergie.

5. L'appareil de communication (100) tel que revendiqué dans la revendication 1,
dans lequel la détermination de ce que le schéma de protection doit être exécuté est effectué en fonction d'un résultat de décodage d'un canal de commande de données physiques, PDCCH, d'une sous-trame de liaison descendante n, dans lequel n est un entier positif, et dans lequel, lorsque le résultat de décodage PDCCH de la sous-trame de liaison descendante n indique qu'un accès en liaison montante en vue d'une transmission de liaison montage est reçue, le premier module radio est configuré pour déterminer que le schéma de protection doit être exécuté.

6. L'appareil de communication (100) tel que revendiqué dans la revendication 5,
dans lequel lorsque la détermination de ce que le schéma de protection doit être exécuté est effectué en fonction d'un résultat de décodage d'un canal de commande de données physiques (PDCCH) d'une sous-trame de liaison descendante n, l'instant prédéterminé d'activation du schéma de protection tome à l'intérieur de la sous-trame de liaison descendante n, ou
dans lequel l'instant prédéterminé d'activation du schéma de protection tombe à l'intérieur d'une durée d'une sous-trame spécifique suivant la sous-trame en liaison descendante n.

7. L'appareil de communication (100) tel que revendiqué dans la revendication 5,
dans lequel lorsque la détermination de ce que le schéma de protection doit être exécuté est effectué en fonction d'un résultat de décodage d'un canal de commande de données physiques (PDCCH) d'une sous-trame en liaison descendante n et lorsque le résultat de décodage PDCCH de la sous-trame en liaison descendante n indique qu'est reçu l'accès en liaison montante pour l'accès à une transmission en liaison montante à l'intérieur d'une sous-trame en liaison montante k suivante, avec k étant un entier positif et k>n, l'instant prédéterminé pour activer le schéma de protection tombe à l'intérieur d'un intervalle entre la sous-trame en liaison descendante n et une sous-trame en liaison montante suivante (k-1).

8. L'appareil de communication (100) tel que revendiqué dans la revendication 5,
dans lequel lorsque la détermination de ce que le schéma de protection doit être exécuté est effectué en fonction d'un résultat de décodage d'un canal de commande de données physiques (PDCCH) d'une sous-trame en liaison descendante n, le premier module radio (10) est configuré en outre pour déterminer une durée prédéterminée pour exécuter le schéma de protection en fonction des résultats de décodage PDCCH d'une pluralité de sous-trames de liaison descendante successives.

9. L'appareil de communication (100) tel que revendiqué dans la revendication 1,
dans lequel lorsque la détermination de ce que le schéma de protection doit être exécuté est effectué en fonction d'un cycle de Réception Discontinue, DRX, configurée pour le premier module radio, et lorsque une sous-trame en liaison descendante n configurée pour le premier module radio tombe dans un intervalle DRX on et qu'un résultat de décodage PDCCH de la sous-trame en liaison descendante n indique qu'est reçu un accès en liaison montant pour l'accès d'une transmission en liaison montante à l'intérieur d'une sous-trame en liaison montant suivante k, le premier module radio (10) est configuré pour déterminer que le schéma de protection doit être exécuté, avec n et k étant des entiers positifs et k>n.

10. L'appareil de communication (100) tel que revendiqué dans la revendication 9,
dans lequel, lorsque la détermination de ce que le schéma de protection doit être exécuté est effectué en fonction d'un cycle de Réception Discontinue, DRX, configurée pour le premier module radio, l'instant prédéterminé pour activer le schéma de protection tombe dans un intervalle entre la sous-trame en liaison descendante n et la sous-trame en liaison montante suivante k-1.

11. L'appareil de communication (100) tel que revendiqué dans la revendication 8,
dans lequel, lorsque la détermination de ce que le schéma de protection doit être exécuté est effectué en fonction d'un cycle de Réception Discontinue, DRX, configurée pour le premier module radio, et lorsque la sous-trame en liaison descendante n tombe dans un intervalle DRX off, le premier module radio est configuré pour déterminer que le schéma de protection ne doit pas être exécuté dans la sous-trame en liaison montante suivante k.

12. L'appareil de communication (100) tel que revendiqué dans la revendication 1,
dans lequel, lorsque la détermination de ce que le schéma de protection doit être exécuté est effectué en fonction d'un motif d'espace de mesure configuré pour le premier module radio pour mesurer un ou plusieurs objets de mesure, et dans lequel lorsqu'une sous-trame en liaison descendante n configuré pour le premier module radio tombe à l'intérieur d'un espace de mesure, le premier module radio (10) est configuré pour déterminer que le schéma de protection ne doit pas être exécuté dans une sous-trame en liaison montante suivante k, ou n et k sont des entiers positifs et k>n.

13. L'appareil de communication (100) tel que revendiqué dans la revendication 1,
dans lequel, lorsque la détermination de ce que le schéma de protection doit être exécuté est effectué en fonction d'une opération de requête de répétition automatique hybride, HARQ, du premier module radio, et dans lequel lorsqu'est reçu un accusé de réception, ACK, dans une sous-trame en liaison descendante n configuré pour le premier module radio et qu'aucun message PDCCH n'est reçu dans la sous-trame en liaison descendante n, le premier module radio (10) est configuré pour déterminer que le schéma de protection ne doit pas être exécuté dans une sous-trame en liaison montante suivante k, ou n et k sont des entiers positif et k>n.

14. Un procédé pour empêcher une interférence de coexistence dans un dispositif, IDC, au sein d'un appareil de communication (100) comprenant au moins un premier module radio (10) fournissant un premier service de communication sans fil au sein d'un premier réseau sans fil suivant un premier protocole et un second module radio (20) fournissant un second service de communication sans fil au sein d'un deuxième réseau sans fil suivant un deuxième protocole, le procédé comprenant:
la détermination de ce qu'un schéma de protection pour empêcher une interférence IDC doit être exécuté (S502); et
la détermination d'un instant prédéterminé pour activer le schéma de protection lorsque le schéma de protection est à exécuter (S504);
**caractérisé par** les étapes supplémentaires:
la transmission d'un message prédéterminé au second réseau sans fil à l'instant prédéterminé pour activer le schéma de protection (S506),
dans lequel lorsque le schéma de protection est à exécuter et que l'instant prédéterminé pour activer le schéma de protection sont déterminés en fonction d'une configuration de sous-trame du premier module radio (10), et dans lequel l'instant prédéterminé pour activer le schéma de protection tombe à l'intérieur d'une durée d'une sous-trame spécifique configurée pour le premier module radio.

15. Le procédé tel que revendiqué dans la revendication 14, comprenant en outre :
l'arrêt de la réception de toute donnée ou signal depuis le second réseau sans file après la transmission dudit message prédéterminé (S508).

16. Le procédé tel que revendiqué dans la revendication 14, dans lequel le message prédéterminé est un message clair à envoyer (CTS), ou
dans lequel le message prédéterminé est un message d'économie d'énergie destiné à informer un dispositif de communication homologue associé au second module radio (20) que le second module radio passe en mode d'économie d'énergie.

17. Le procédé tel que revendiqué dans la revendication 14, dans lequel si l'exécution du schéma de protection est déterminé en fonction d'un résultat de décodage d'un canal de commande de données physiques, PDCCH, d'une sous-trame de liaison descendante n, dans lequel n est un entier positif, et dans lequel, lorsque le résultat de décodage PDCCH de la sous-trame de liaison descendante n indique qu'est reçu un accès en liaison montante en vue d'une transmission de liaison montage, le schéma de protection est déterminé comme devant être exécuté.

18. Le procédé tel que revendiqué dans la revendication 17, dans lequel lorsque le résultat du décodage PDCCH de la sous-trame en liaison descendante n indique qu'une réception d'un accès en liaison montante pour l'accès à une transmission en liaison montante dans une sous-trame en liaison montante suivante k, l'instant prédéterminé pour activer le schéma de protection intervient durant l'intervalle entre la sous-trame en liaison descendante n et une sous-trame en liaison montante suivante (k-1), ou k est un entier positif et k>n,
le procédé comportant en particulier en outre :
la détermination d'une durée prédéterminée pour exécuter le schéma de protection en fonction des résultats du décodage PDCCH d'une pluralité de sous-trame en liaison descendante successives.

19. Le procédé tel que revendiqué dans la revendication 14, dans lequel, lorsque la détermination de ce que le schéma de protection doit être exécuté est effectué en fonction d'un cycle de Réception Discontinue (DRX) configurée pour le premier module radio (10), et dans lequel lorsque une sous-trame en liaison descendante n configurée pour le premier module radio intervient dans un intervalle DRX off, détermination est faite de ce que le schéma de protection ne doit pas être exécuté dans une sous-trame en liaison montante suivante k, ou n est un entier positif, ou n et k sont des entiers positifs et k>n, ou
lorsque la détermination de ce que le schéma de protection doit être exécuté est effectué en fonction d'un motif d'espace de mesure configuré pour le premier module radio (10) pour mesurer un ou plusieurs objets de mesure, et dans lequel lorsqu'une sous-trame en liaison descendante n configurée pour le premier module radio intervient durant un espace de mesure, le schéma de protection est déterminé comme ne devant pas être exécuté dans une sous-trame en liaison montante suivante k, ou n et k sont des entiers positifs et k>n,
ou
lorsque la détermination de ce que le schéma de protection doit être exécuté est effectué en fonction d'une opération de requête de répétition automatique hybride (HARQ) du premier module radio (10), et dans lequel lorsqu'est reçu un accusé de réception (ACK) dans une sous-trame en liaison descendante n configurée pour le premier module radio et qu'aucun message PDCCH n'est reçu dans la sous-trame exécuté dans une sous-trame en liaison montante suivante k, ou n et k sont des entiers positif et k>n.
